# EUROPÄISCHE PATENTSCHRIFT

(11) **EP 2 976 545 B1**
(45) Veröffentlichungstag und Bekanntmachung des Hinweises auf die Patenterteilung: **27.03.2019**
(21) Anmeldenummer: 14705190.8
(22) Anmeldetag: 19.02.2014
(51) Int. Cl.: F16C 43/02, F16C 27/06, F16C 33/20, F16F 1/38, F16F 13/14

(54) **VERFAHREN ZUM HERSTELLEN EINES LAGERS UND LAGER**
METHOD FOR PRODUCING A BEARING, AND BEARING
PROCÉDÉ DE FABRICATION D'UN PALIER ET PALIER

(30) Priorität: 21.03.2013 DE 102013204995
(43) Veröffentlichungstag der Anmeldung: 27.01.2016
(73) Patentinhaber: BOGE Elastmetall GmbH, 49401 Damme (DE); Audi AG, 85045 Ingolstadt (DE)
(72) Erfinder: SCHNAARS, Wolfgang, 49084 Osnabrueck (DE); CONRAD, Thomas, 91757 Treuchtlingen (DE)
(74) Vertreter: Bossmeyer, Jörg Peter
(86) Internationale Anmeldenummer: PCT/EP2014/053208
(87) Internationale Veröffentlichungsnummer: WO 2014/146851

(56) Entgegenhaltungen:
- EP-A2- 0 388 520
- DE-A1-102004 045 669
- FR-A1- 2 819 301

## Beschreibung

Die Erfindung betrifft ein Verfahren zum Herstellen eines Lagers, insbesondere eines hydraulischen Achsträgerlagers, gemäß dem Oberbegriff des Anspruchs 1 sowie ein Lager gemäß dem Oberbegriff des Anspruchs 6.

Die im Stand der Technik bekannten Achsträgerlager weisen üblicherweise ein Innenteil aus Aluminium, einen Radialkanal, ein Außenteil und einen elastomeren Bereich, welcher zwischen dem Innenteil und dem Außenteil angeordnet ist, auf. Der elastomere Bereich wird dabei durch einen Käfig aus Stahl oder aber aus Kunststoff verstärkt, was den Vorteil einer wesentlichen Gewichtsreduzierung des Lagers mit sich bringt. Dabei wird beispielsweise ein Käfig aus Stahl in das Gummi des elastomeren Bereichs eingebettet und wird dann vollständig von dem Gummi umhüllt. Bei den aus dem Stand der Technik bekannten Konfigurationen, die einen gewichtsreduzierenden Kunststoffkäfig einsetzen, ist dieser dagegen lediglich bereichsweise von dem elastomeren Bereich umgeben. Ein als Elastomerbuchse ausgestaltetes Lager ist aus DE 10 2007 022 410 A1 bekannt. Aus DE102004045669, FR2819301, DE102006045051 sind andere Buchsenlager mit einem Käfig aus Kunststoff auch bekannt.

Die wie oben beschrieben ausgebildeten Achsträgerlager müssen jedoch kalibriert werden. Wenn Stahlkäfige eingesetzt werden, ist dies relativ unproblematisch, wobei das Lager vor der Montage kalibriert wird. Nach der Montage erfolgt dann eine weitere Kalibrierung, die zum einen die Dichtigkeit und zum anderen die Maßhaltigkeit sicherstellt. Bei der letzteren Kalibrierung werden am Umfang mehrere Markierungen nach innen eingedrückt, wobei das Außenteilmaterial über den Käfigrand gedrückt wird. Dies dient dazu, das Außenteil in Auspressrichtung formschlüssig über den elastomeren Bereich mit dem Innenteil zu verbinden. Wie bereits erwähnt, weisen Lager mit Stahlkäfigen jedoch ein recht hohes Gewicht auf.

Ist der Käfig dagegen aus Kunststoff hergestellt, gestaltet sich die Kalibrierung zum Aufbringen einer erhöhten Druckvorspannung im elastomeren Bereich schwierig. Diese ist jedoch im Hinblick auf die Lebensdauer, das Kennlinienverhältnis und zum Festsitz des Kunststoffkäfigs in der Anordnung notwendig.

Daher ist es eine Aufgabe der vorliegenden Erfindung, ein Verfahren zum Herstellen eines gewichtsreduzieren Lagers mit Kunststoffkäfig vorzusehen, mittels welchem eine Kalibrierung auf einfache und kostengünstige Weise erfolgen kann. Ebenfalls soll ein entsprechend hergestelltes gewichtsreduziertes Lager bereitgestellt werden.

Diese Aufgabe wird durch ein Verfahren zum Herstellen eines Lagers mit den Merkmalen gemäß Anspruch 1 und eines Lagers mit den Merkmalen gemäß Anspruch 6 gelöst. Bevorzugte Ausführungsformen der Erfindung sind in den abhängigen Ansprüchen definiert.

Es wird ein Verfahren zum Herstellen eines Lagers, insbesondere eines hydraulischen Achsträgerlagers, bereitgestellt, welches die folgenden Schritte umfasst: Vormontieren eines Innenteils in einem Außenteil mit einem dazwischen angeordneten Elastomerkörper, welcher mit einem Kunststoffkäfig verstärkt ist, der an einer Innenwandung des Außenteils zumindest teilweise anliegt, wobei der Kunststoffkäfig ausgebildet ist, um einen oberen Rand und einen unteren Rand des Außenteils radial zu überragen und an dem unteren Rand des Außenteils diesen zu überkragen; und gleichzeitiges Kalibrieren des Außenteils und des Kunststoffkäfigs durch Einengen des Außenteils und des Kunststoffkäfigs von einem jeweiligen ersten Durchmesser auf einen jeweiligen zweiten Durchmesser, welcher kleiner als der jeweilige erste Durchmesser ist, wobei nach dem Einengen der Kunststoffkäfig den oberen Rand des Außenteils ebenfalls zur formschlüssigen Axialsicherung des Außenteils überkragt.

Mittels des Verfahrens ist eine Kalibrierung sowohl des Außenteils als auch gleichzeitig des Kunststoffkäfigs auf einfache Weise und somit kostengünstig in einem einzigen Verfahrensschritt möglich. Hierbei wird das Außenteil in der Endstellung formschlüssig mit dem Kunststoffkäfig verbunden, was die erforderliche Axialsicherung des Außenteils bewirkt. Beispielsweise sind hierdurch auch die im Stand der Technik verwendeten Markierungen und Eindrückungen am Außenteil überflüssig.

Vorzugsweise ist bei dem Schritt des Vormontierens ein Spiel, insbesondere von 2 mm, vorhanden. Darüber hinaus ist es bevorzugt, wenn das Maß der Einengung des Außenteils von dem ersten Durchmesser auf den zweiten Durchmesser größer ist als das vorgenannte Spiel, insbesondere, dass das Maß der Einengung mehr als 3 mm, bevorzugt etwa 4 mm beträgt.

Vorzugsweise wird bei dem Schritt des Vormontierens das Außenteil auf das Innenteil mit dem Elastomerkörper und dem Kunststoffkäfig einfach von oben aufgeschoben.

Weiterhin ist es vorteilhaft, wenn der Elastomerkörper mit dem Kunststoffkäfig in einem Vulkanisationsschritt verbunden wird, wobei der Kunststoffkäfig im Wesentlichen formschlüssig in ein Werkzeug eingelegt wird. Hierdurch wird eine unerwünschte Verformung des Kunststoffkäfigs bei dem Vulkanisationsprozess vermieden.

Es wird ebenfalls ein Lager, insbesondere ein hydraulisches Achsträgerlager, mit einem Innenteil, einem Außenteil und einem dazwischen angeordneten Elastomerkörper, welcher mit einem Kunststoffkäfig verstärkt ist, bereitgestellt, wobei das Außenteil einen oberen Rand und einen unteren Rand aufweist, wobei der Kunststoffkäfig den oberen Rand und den unteren Rand des Außenteils zur formschlüssigen Axialsicherung des Außenteils überkragt. Die Verstärkung durch einen Käfig aus Kunststoff bewirkt im Vergleich zu einem Käfig aus Stahl eine wesentliche Gewichtsreduzierung, wodurch im Automobilbau auch eine Reduzierung des CO₂-Ausstoßes erzielt werden kann. Auch sind hierdurch Kosteneinsparungen möglich. Weiterhing bietet die Verwendung von Kunststoff für den Käfig den Vorteil, dass sich mehr Möglichkeiten in der Designgestaltung ergeben.

Gemäß einer bevorzugten Ausführungsform liegt der Kunststoffkäfig zumindest bereichsweise an einer Innenwandung des Außenteils an, wobei der Anlagebereich des Kunststoffkäfigs an der Innenwandung des Außenteils vorzugsweise mehr als 20 % der Mantelfläche der Innenwandung beträgt.

Vorzugsweise weist der Kunststoffkäfig zumindest eine Dichtrille, insbesondere eine Vielzahl von Dichtrillen, auf, welche an einer Außenseite des Kunststoffkäfigs angeordnet sind, welche der Innenwandung des Außenteils gegenüberliegt, wobei die zumindest eine Dichtrille mit einem elastomeren Material ausgefüllt ist. Vorteilhafterweise wird die zumindest eine Dichtrille mit dem elastomeren Material des elastomeren Körpers gefüllt, was bei der Herstellung in einem Verfahrensschritt erfolgen kann.

Gemäß noch einer weiteren bevorzugten Ausführungsform weist der Kunststoffkäfig zumindest einen Stegbereich, insbesondere eine Vielzahl von Stegbereichen, auf, welche zumindest teilweise unterfüttert sind. Durch die Unterfütterung erhalten die Stegbereiche eine erhöhte Stabilität. Die Stegbereiche selbst dienen dazu, zu verhindern, dass Kanäle des Lagers bei dem Kalibriervorgang eingeengt oder sogar verschlossen werden können.

Vorzugsweise ist der Radialanschlag aus Kunststoff ausgebildet. Hierdurch wird ein geringes Gesamtgewicht erzielt.

Gemäß einer weiteren vorzugsweisen Ausführungsform ist der Radialanschlag als oberer Radialanschlag ausgebildet und an einem oberen Rand des Lagers angeordnet.

Im Nachfolgenden werden Ausführungsformen der Erfindung unter Bezugnahme auf die beigefügte Zeichnung näher beschrieben. Es zeigen:
- Fig. 1A - 1E: verschiedene Ansichten eines Lagers gemäß einer Ausführungsform;
- Fig. 2A - 2D: verschiedene Ansichten eines Lagers gemäß einer weiteren Ausführungsform;
- Fig. 3A - 3F: verschiedene weitere Ansichten eines Kunststoffkäfigs gemäß einer Ausführungsform; und
- Fig. 4A - 4F: verschiedene Ansichten eines Kunststoffkäfigs gemäß einer weiteren Ausführungsform.

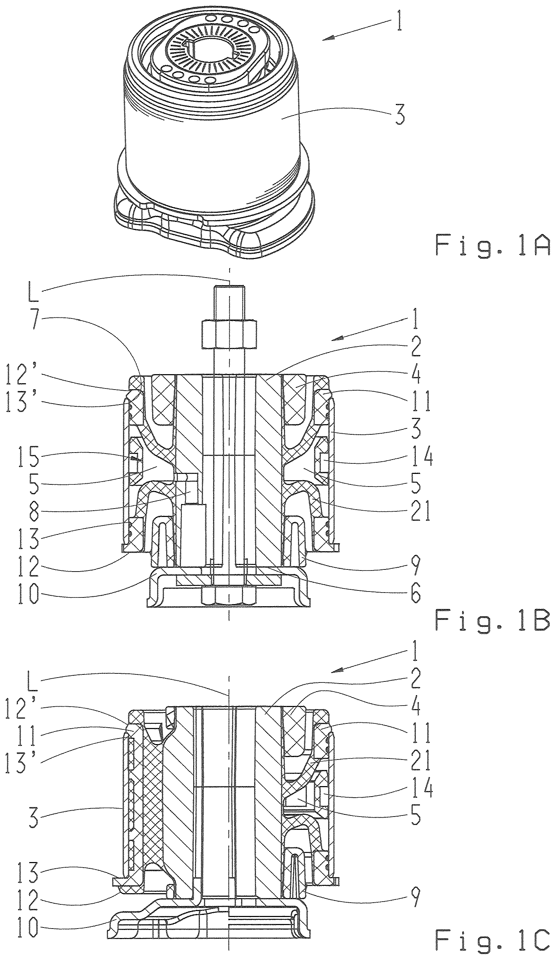

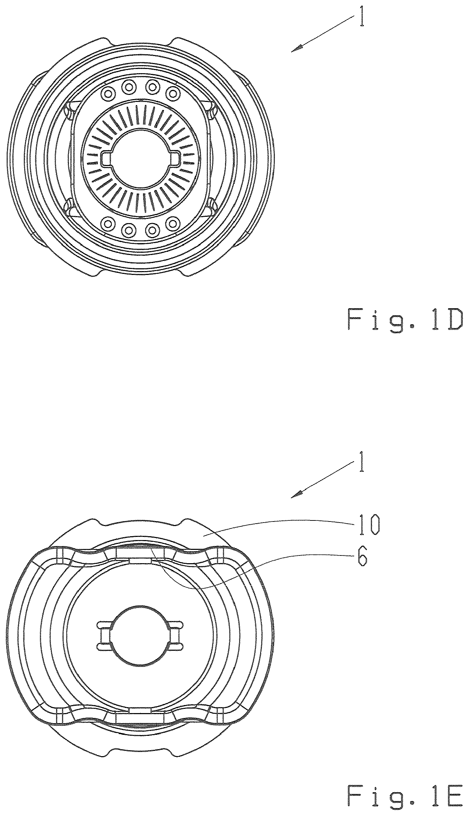

Figuren 1A bis 1E zeigen verschiedene Ansichten eines als hydraulisches Achsträgerlager ausgebildeten Lagers 1 gemäß einer Ausführungsform, wobei Figur 1A eine isometrische Ansicht des Lagers 1 ist, Figur 1B eine Schnittansicht durch das Lager 1, Figur 1C eine weitere Schnittansicht durch das Lager 1 um 90° um die Längsachse L gedreht ist, Figur 1D eine Draufsicht auf das Lager 1 und Figur 1E eine Ansicht von unten ist. Wie insbesondere aus Figur 1B ersichtlich ist, weist das Lager 1 ein Innenteil 2, ein im Wesentlichen hohlzylindrisch ausgebildetes Außenteil 3 aus Aluminium und ein zwischen dem Innenteil 2 und dem Außenteil 3 angeordneten Elastomerkörper 21 auf. Der Elastomerkörper 21 bildet an radial gegenüberliegenden Seiten über einen Radialkanal 14 miteinander in Fluidkommunikation stehende radiale Ausgleichskammern 5 aus. Die in Figur 1B gezeigte rechte Ausgleichskammer 5 öffnet sich radial innenseitig zu einem in dem Innenteil 2 ausgesparten Befüllungskanal 8. Weiterhin ist ein Radialanschlag 4 ist aus Kunststoff ausgebildet und an einem oberen Rand des Lagers angeordnet, er bildet somit einen oberen Radialanschlag aus. Der oberer Radialanschlag ist auf das Innenteil 2 aufmontiert.

Der Elastomerkörper 21 ist auf das Innenteil 2 aufvulkanisiert. Weiterhin ist ein weiterer Anschlag als unterer Radialanschlag 9 an einem axialen Ende des Innenteils 2 vorgesehen, welches einen Axialanschlag 10 abstützt, der an einem stirnseitigen Ende bzw. an der Unterseite 6 des Innenteils 2 montiert ist. Der untere Radialanschlag 9 ist ebenfalls aus Kunststoff ausgebildet. Der Axialanschlag 10 ist aus Aluminium ausgebildet.

Der Elastomerkörper 21 ist durch einen Kunststoffkäfig 11 verstärkt, welcher in den Elastomerkörper 21 einvulkanisiert ist. Der Kunststoffkäfig 11 liegt bereichsweise an einer Innenwandung 7 des Außenteils 3 an. Ein unteres axiales Ende 12 und ein oberes axiales Ende 12' des Kunststoffkäfigs 11 (siehe Figuren 1B und 1C) sind jeweils um 90° radial nach außen geformt, um so einen unteren Rand 13 und einen oberen Rand 13' des Außenteils 3 zu überkragen und hierdurch das Außenteil 3 formschlüssig axial zu sichern, so dass das Außenteil 3 in axialer Richtung fest relativ zu dem Kunststoffkäfig 11 und damit dem Elastomerkörper 21 gehalten wird.

Weiterhin weist der Kunststoffkäfig 11 Stegbereiche 15 auf, welche unterfüttert sein können, um eine erhöhte Stabilität aufzuweisen. Die Stegbereiche 15 verhindern, dass bei dem Kalibrierprozess der Radialkanal 14 eingeengt oder verschlossen wird.

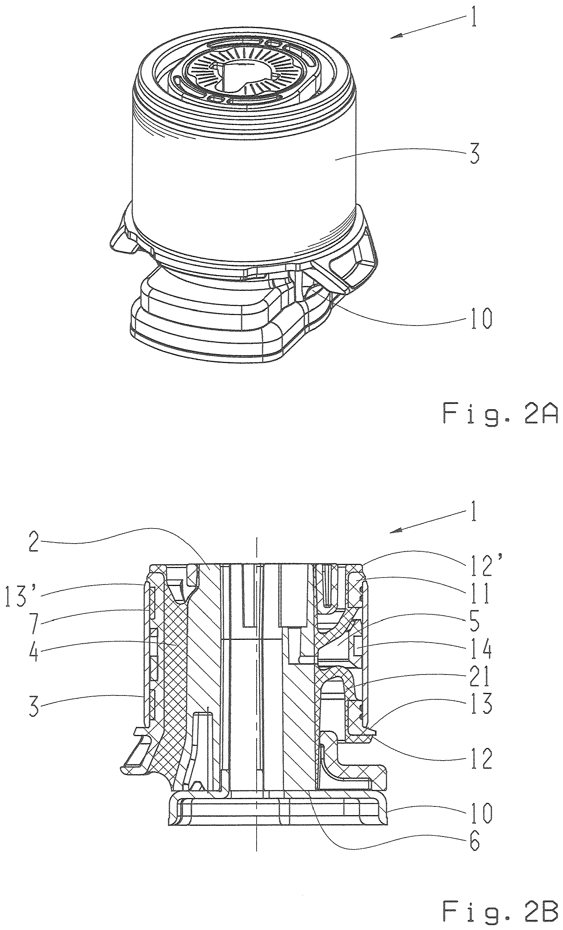

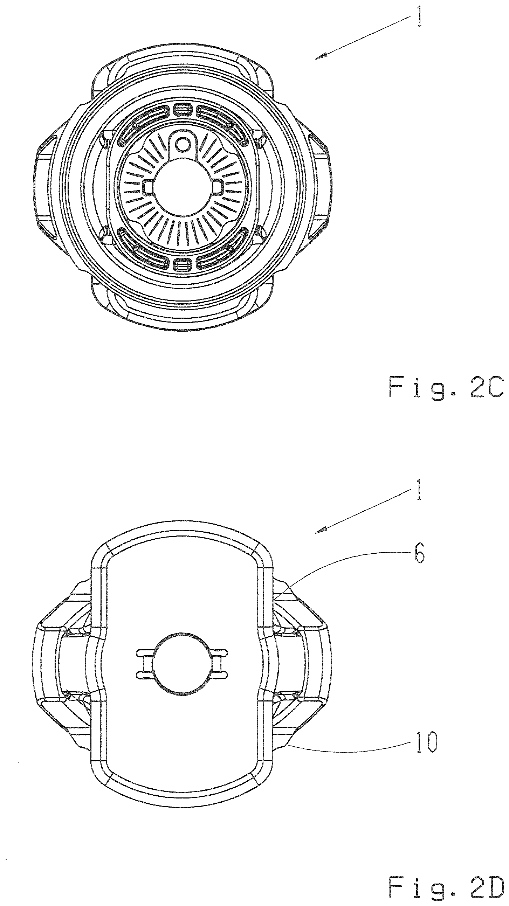

Figuren 2A bis 2D zeigen verschiedene Ansichten eines als hydraulisches Achsträgerlager ausgebildeten Lagers 1 gemäß einer weiteren Ausführungsform, wobei Figur 2A eine isometrische Ansicht des Lagers 1 ist, Figur 2B eine Schnittansicht durch das Lager 1, Figur 2C eine Draufsicht auf das Lager 1 und Figur 2D eine Ansicht des Lagers 1 von unten ist. Der Aufbau des hier dargestellten Lagers 1 entspricht im Wesentlichen dem Aufbau des in den Figuren 1A bis 1E gezeigten Lagers 1 und unterscheidet sich lediglich im Hinblick auf die Ausbildung des Axialanschlages 10 an dem unteren Ende des Lagers 1.

Das Lager 1, welches in den Figuren 2A bis 2D dargestellt ist, sowie das Lager 1, welches in den Figuren 1A bis 1E dargestellt ist, wird wie folgt hergestellt. In einer Vormontage werden das Innenteil 2, der Elastomerkörper 21, der Radialkanal 14 und das Außenteil 3 aus Aluminium locker ineinander montiert, so dass der Kunststoffkäfig 11 unmittelbar an der Innenwandung 7 des Außenteils 3 angeordnet ist. Das hohlzylindrische Außenteil 3 wird hierbei von oben aufgeschoben. Der Kunststoffkäfig 11 überragt dabei das Außenteil 3 radial an dessen beiden Enden, d. h. an den oberen und unteren Rändern 13, 13'. In diesem unkalibrierten Zustand überkragt dabei der Kunststoffkäfig 11 das Außenteil 3 lediglich an dem unteren Rand 13. In einem dann folgenden Kalibrierungsprozess wird das Außenteil 3 aus Aluminium eingeengt, d. h. der Durchmesser des Außenteils 3 wird um ca. 4 mm reduziert. Hierbei wird jedoch nicht nur der Durchmesser des Außenteils 3 reduziert, sondern ebenfalls im gleichen Schritt der Durchmesser des Kunststoffkäfigs 11. Bei der lockeren Vormontage ist ein Spiel von 2 mm vorhanden. Die resultierende Einengung des Kunststoffkäfigs beträgt also ca. 2mm im Durchmesser. Somit werden sowohl das Außenteil 3 als auch der Kunststoffkäfig 11 in einem einzigen Verfahrensschritt kalibriert. Nach der Kalibrierung überkragt der Kunststoffkäfig 11 das Außenteil 3 dann auch an dessen oberen Rand 13', so dass die gewünschte Axialsicherung gegen ein Herausrutschen nach oben gegeben ist.

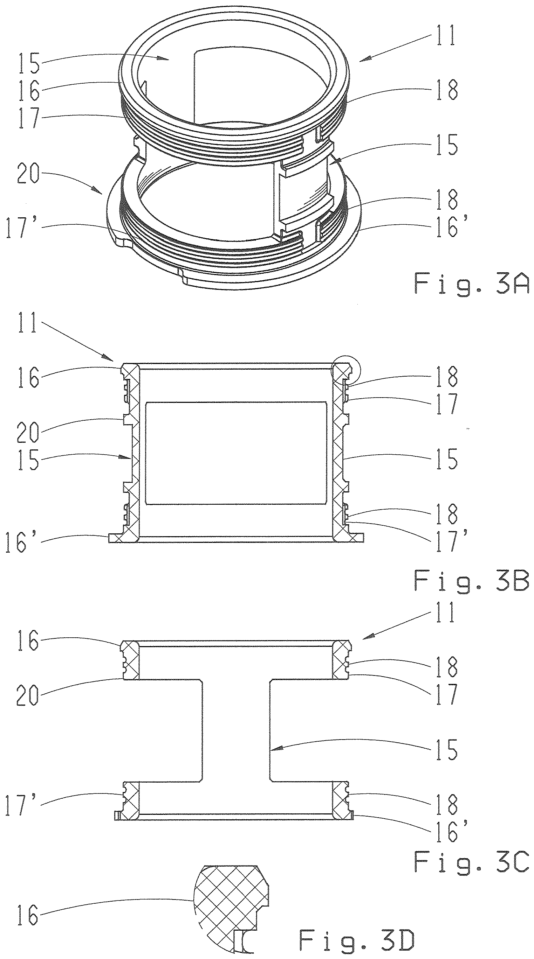

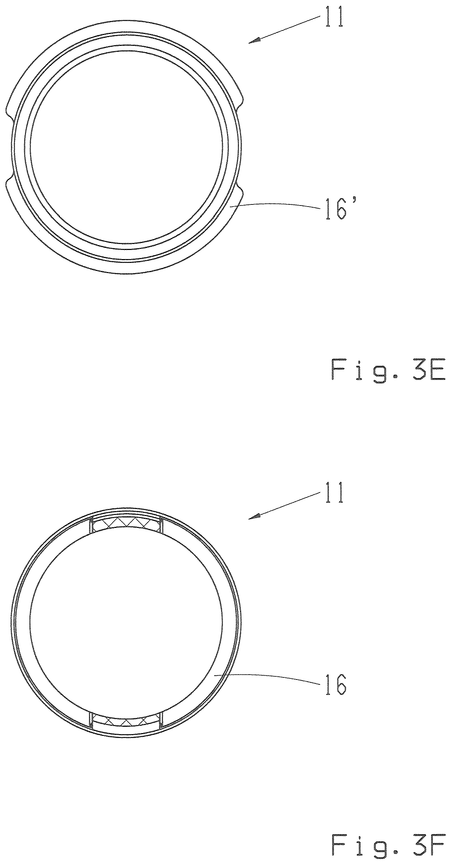

Figuren 3A bis 3F zeigen verschiedene weitere Ansichten eines Kunststoffkäfigs 11 gemäß einer Ausführungsform, wobei Figur 3A eine isometrische Ansicht des Kunststoffkäfigs 11 ist, Figur 3B eine Schnittansicht durch den Kunststoffkäfig 11 ist, Figur 3C eine weitere Schnittansicht durch den Kunststoffkäfig 11 ist, welche gegenüber der Schnittansicht von Figur 3B etwa um 90° um die Längsachse L des Kunststoffkäfigs 11 gedreht ist, Figur 3D eine Detailansicht des oberen Rands 16 des Kunststoffkäfigs 11 ist, Figur 3E eine Ansicht des Kunststoffkäfigs 11 von unten und Figur 3F eine Draufsicht auf den Kunststoffkäfig 11 ist. Wie hier erkennbar ist, weist der Kunststoffkäfig 11 zwei der oben beschriebenen Stegbereiche 15 auf. Weiterhin weist der Kunststoffkäfig 11 an seiner Außenseite 20 an einem oberen Abschnitt 17 und an einem unteren Abschnitt 17' eine Vielzahl von Dichtrillen 18 auf, welche im Montagezustand des Lagers 1 der Innenwandung 7 des Außenteils 3 gegenüberliegt (siehe beispielsweise Figur 1B). Die Dichtrillen 18 werden während des Spritzvorgangs des Elastomerkörpers 21 gleichzeitig mit elastomeren Material befüllt.

Weiterhin ist in der in Figur 3D dargestellten Detailansicht des oberen Rands 16 des Kunststoffkäfigs 11 (durch A in Fig. 3B gekennzeichnet) erkennbar, dass der obere Rand 16 nach außen gewölbt und dadurch mit einer Rundung versehen ist. Im Gegensatz dazu ist der untere auskragende Rand 16' des Kunststoffkäfigs 11 nicht gerundet.

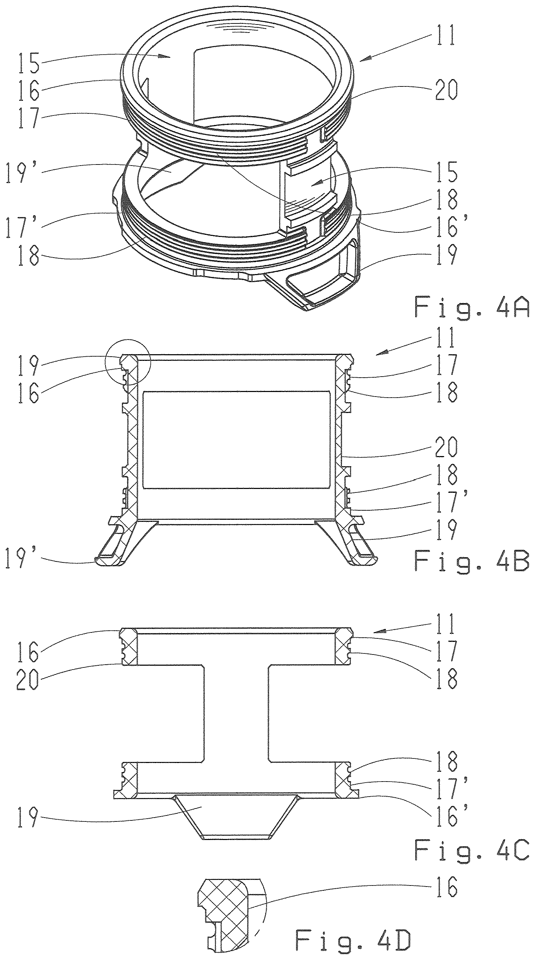

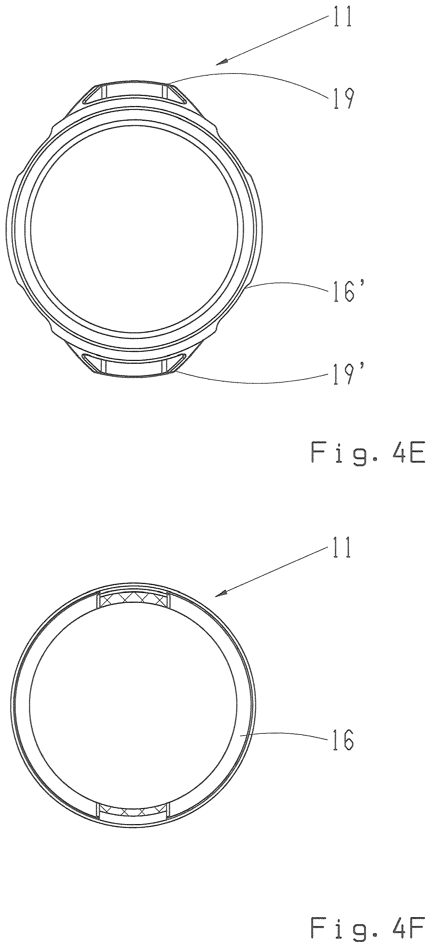

Figuren 4A bis 4F zeigen verschiedene Ansichten eines Kunststoffkäfigs 11 gemäß einer weiteren Ausführungsform, wobei Figur 4A eine isometrische Ansicht des Kunststoffkäfigs 11 ist, Figur 4B eine Schnittansicht durch den Kunststoffkäfig 11 ist, Figur 4C eine weitere Schnittansicht durch den Kunststoffkäfig 11 ist, welche gegenüber der Schnittansicht von Figur 4B etwa um 90° um die Längsachse L des Kunststoffkäfigs 11 gedreht ist, Figur 4D eine Detailansicht des oberen Rands 16 des Kunststoffkäfigs 11 (durch A in Figur 4B gekennzeichnet) ist, Figur 4E eine Ansicht des Kunststoffkäfigs 11 von unten und Figur 4F eine Draufsicht auf den Kunststoffkäfig 11 ist. Die hier dargestellte Ausführungsform des Kunststoffkäfigs 11 unterscheidet sich von der in den Figuren 3A bis 3F dargestellten Ausführungsform dadurch, dass einerseits der obere Rand 16 des Kunststoffkäfigs 11, welcher im Detail in Figur 4D gezeigt ist, zwar abgerundet jedoch nicht nach außen gewölbt ist, und dass andererseits der untere Rand 16' mit zwei nach unten gerichteten und leicht nach außen abgewinkelten konischen Abstützkonturen 19, 19' versehen ist.

### Bezugszeichen

- 1: Lager
- 2: Innenteil
- 3: Außenteil
- 4: Radialanschlag
- 5: Ausgleichskammern
- 6: Unterseite des Innenteils
- 7: Innenwandung des Außenteils
- 8: Befüllungskanal
- 9: unterer Radialanschlag
- 10: Axialanschlag
- 11: Kunststoffkäfig
- 12, 12': unteres und oberes axiales Ende des Kunststoffkäfigs
- 13, 13': unterer und oberer Rand des Außenteils
- 14: Radialkanal
- 15: Stegbereiche
- 16, 16': oberer und unterer Rand des Kunststoffkäfigs
- 17, 17': oberer und unterer Abschnitt des Kunststoffkäfigs
- 18: Dichtrillen
- 19, 19': konische Abstützkonturen
- 20: Außenseite des Kunststoffkäfigs
- 21: Elastomerkörper

## Patentansprüche

1. Verfahren zum Herstellen eines Lagers (1), insbesondere eines hydraulischen Achsträgerlagers, wobei das Verfahren die folgenden Schritte umfasst
- Vormontieren eines Innenteils (2) in einem Außenteil (3) mit einem dazwischen angeordneten Elastomerkörper (21), welcher mit einem Kunststoffkäfig (11) verstärkt ist, der an einer Innenwandung (7) des Außenteils (3) zumindest teilweise anliegt, wobei der Kunststoffkäfig (11) ausgebildet ist, um einen ersten axialen Rand (13') und einen diesem in axialer Richtung gegenüberliegenden zweiten axialen Rand (13) des Außenteils (3) radial zu überragen und an dem zweiten axialen Rand (13) des Außenteils (3) diesen zu überkragen; **gekennzeichnet durch**
- gleichzeitiges Kalibrieren des Außenteils (3) und des Kunststoffkäfigs (11) durch Einengen des Außenteils (3) und des Kunststoffkäfigs (11) von einem jeweiligen ersten Durchmesser auf einen jeweiligen zweiten Durchmesser, welcher kleiner als der jeweilige erste Durchmesser ist, wobei nach dem Einengen der Kunststoffkäfig (11) den ersten axialen Rand (13') des Außenteils (3) ebenfalls zur formschlüssigen Axialsicherung des Außenteils (3) überkragt.

2. Verfahren gemäß Anspruch 1, **dadurch gekennzeichnet, dass** bei dem Schritt des Vormontierens das Innenteil (2), der Elastomerkörper (21) und das Außenteil (3) locker ineinander montiert werden.

3. Verfahren gemäß Anspruch 1 oder 2, **dadurch gekennzeichnet, dass** das Maß der Einengung des Außenteils (3) von dem ersten Durchmesser auf den zweiten Durchmesser mindestens 3 mm, bevorzugt etwa 4 mm beträgt.

4. Verfahren gemäß einem der Ansprüche 1 bis 3, **dadurch gekennzeichnet, dass** bei dem Schritt des Vormontierens das Außenteil (3) auf das Innenteil (2) mit dem Elastomerkörper (21) und dem Kunststoffkäfig (11) mit seinem zweiten axialen Rand (13) voran aufgeschoben wird.

5. Verfahren gemäß einem der Ansprüche 1 bis 4, **dadurch gekennzeichnet, dass** der Elastomerkörper (21) mit dem Kunststoffkäfig (11) in einem Vulkanisationsschritt verbunden wird, wobei der Kunststoffkäfig (11) im Wesentlichen formschlüssig in ein Werkzeug eingelegt wird.

6. Verfahren gemäß einem der Ansprüche 1 bis 5, **dadurch gekennzeichnet, dass** der Anlagebereich des Kunststoffkäfigs (11) an der Innenwandung (7) des Außenteils (3) mehr als 20 % der Mantelfläche der Innenwandung (7) beträgt.

7. Verfahren gemäß einem der Ansprüche 1 bis 6, **dadurch gekennzeichnet, dass** der Kunststoffkäfig (11) zumindest eine Dichtrille (18), insbesondere eine Vielzahl von Dichtrillen (18), aufweist, welche an einer Außenseite (20) des Kunststoffkäfigs (11) angeordnet sind, welche der Innenwandung (7) des Außenteils (3) gegenüberliegt, wobei die zumindest eine Dichtrille (18) mit dem elastomeren Material des Elastomerkörpers (21) gefüllt wird.

8. Verfahren gemäß einem der Ansprüche 1 bis 7, **dadurch gekennzeichnet, dass** der Kunststoffkäfig (11) zumindest einen Stegbereich (15), insbesondere eine Vielzahl von Stegbereichen (15), aufweist, welche zumindest teilweise unterfüttert sind.

9. Verfahren gemäß einem der Ansprüche 1 bis 8, **dadurch gekennzeichnet, dass** ein Radialanschlag (4) aus Kunststoff auf das Innenteil (2) aufmontiert wird.

10. Verfahren gemäß Anspruch 9, **dadurch gekennzeichnet, dass** der Radialanschlag (4) an einem axialen Rand des Lagers angeordnet wird.

## Claims

1. A method for producing a bearing (1), in particular a hydraulic axle support bearing, wherein the method comprises the following steps:
- preassembling an inner part (2) in an outer part (3) with an elastomer body (21) disposed between them, the elastomer body being reinforced by a plastic cage (11), the plastic cage (11) at least partially bearing against an inner wall (7) of the outer part (3), wherein the plastic cage (11) is configured to protrude radially over a first axial edge (13') and a second axial edge (13) of the outer part (3) opposing this in the axial direction and at the second axial edge (13) of the outer part (3) to project over this; **characterised by**
- simultaneously calibrating the outer part (3) and the plastic cage (11) by constricting the outer part (3) and the plastic cage (11) from a respective first diameter to a respective second diameter, which is smaller than the respective first diameter, wherein after the constriction, the plastic cage (11) projects over the first axial edge (13') of the outer part (3) for form-fitting axial securing of the outer part (3) as well.

2. Method according to Claim 1, **characterised in that** during the pre-assembly of the inner part (2), the elastomer body (21) and the outer part (3) are mounted loosely inside each other.

3. Method according to Claim 1 or 2, **characterised in that** the amount of constriction of the outer part (3) from the first diameter to the second diameter is at least 3 mm, preferably approximately 4 mm.

4. Method according to any one of Claims 1 to 3, **characterised in that** in the pre-assembly step, the outer part (3) is slid onto the inner part (2) with the elastomer body (21) and the plastic cage (11), with its second axial edge (13) first.

5. Method according to any one of Claims 1 to 4, **characterised in that** the elastomer body (21) is connected to the plastic cage (11) in a vulcanisation step, wherein the plastic cage (11) is placed into a tool substantially in a form fit manner.

6. Method according to any one of Claims 1 to 5, **characterised in that** the contact region of the plastic cage (11) against the inner wall (7) of the outer part (3) is more than 20% of the curved surface area of the inner wall (7).

7. Method according to any one of Claims 1 to 6, **characterised in that** the plastic cage (11) has at least one sealing groove (18), in particular a plurality of sealing grooves (18), which are arranged on an outside (20) of the plastic cage (11), opposite the inner wall (7) of the outer part (3), wherein the at least one sealing groove (18) is filled with the elastomer material of the elastomer body (21).

8. Method according to any one of Claims 1 to 7, **characterised in that** the plastic cage (11) has at least one web region (15), in particular a plurality of web regions (15), which are at least partially underpinned.

9. Method according to any one of Claims 1 to 8, **characterised in that** a radial stop (4) made of plastic is mounted on the inner part (2).

10. Method according to Claim 9, **characterised in that** the radial stop (4) is arranged on an axial edge of the bearing.

## Revendications

1. Procédé de fabrication d'un palier (1), plus particulièrement d'un palier de support d'axe hydraulique, ce procédé comprenant les étapes suivantes
- pré-montage d'une partie interne (2) dans une partie externe (3) avec un corps en élastomère (21) disposé entre les deux, qui est renforcé par une cage de matière plastique (11), qui s'appuie au moins partiellement contre une paroi interne (7) de la partie externe (3), la cage de matière plastique (11) étant conçue pour dépasser radialement d'un premier bord axial (13') et d'un deuxième bord axial (13), opposé à celui-ci, de la partie externe (3) et pour être en saillie par rapport à celle-ci au niveau du deuxième bord axial (13) de la partie externe (3) ; **caractérisé par**
- le calibrage simultané de la partie externe (3) et de la cage en matière plastique (11) par le resserrage de la partie externe (3) et de la cage en matière plastique (11) d'un premier diamètre vers un deuxième diamètre, qui est inférieur au premier diamètre, de sorte que, après le resserrage, la cage en matière plastique (11) soit également en saillie par rapport au premier bord axial (13') de la partie externe (3) pour la fixation axiale par complémentarité de forme de la partie externe (3).

2. Procédé selon la revendication 1, **caractérisé en ce que**, à l'étape de pré-montage, la partie interne (2), le corps en élastomère (21) et la partie externe (3) sont montés les uns dans autres de manière lâche.

3. Procédé selon la revendication 1 ou 2, **caractérisé en ce que** le degré de resserrage de la partie externe (3) du premier diamètre au deuxième diamètre est d'au moins 3 mm, de préférence d'environ 4 mm.

4. Procédé selon l'une des revendications 1 à 3, **caractérisé en ce que**, à l'étape de pré-montage, la partie externe (3) est poussée vers la partie interne (2) avec le corps en élastomère (21) et la cage en matière plastique (11) avec son deuxième bord axial (13).

5. Procédé selon l'une des revendications 1 à 4, **caractérisé en ce que** le corps en élastomère (21) est relié avec la cage en matière plastique (11) dans une étape de vulcanisation, la cage en matière plastique (11) étant insérée globalement par complémentarité de forme dans un outil.

6. Procédé selon l'une des revendications 1 à 5, **caractérisé en ce que** la partie d'appui de la cage en matière plastique (11) contre la paroi interne (7) de la partie externe (3) représente plus de 20 % de la surface d'enveloppe de la paroi interne (7).

7. Procédé selon l'une des revendications 1 à 6, **caractérisé en ce que** la cage en matière plastique (11) comprend une rainure d'étanchéité (18), plus particulièrement une pluralité de rainures d'étanchéité (18), qui sont disposées au niveau d'un côté externe (20) de la cage en matière plastique (11), qui est opposé à la paroi interne (7) de la partie externe (3), l'au moins une rainure d'étanchéité (18) étant remplie avec le matériau élastomère du corps en élastomère (21).

8. Procédé selon l'une des revendications 1 à 7, **caractérisé en ce que** la cage en matière plastique (11) comprend au moins une partie de nervure (15), plus particulièrement une pluralité de parties de nervures (15), qui sont au moins partiellement étayées.

9. Procédé selon l'une des revendications 1 à 8, **caractérisé en ce qu'**une butée radiale (4) en matière plastique est montée sur la partie interne (2).

10. Procédé selon la revendication 9, **caractérisé en ce que** la butée radiale (4) est disposée contre un bord axial du palier.
